(19) Europäisches Patentamt / European Patent Office / Office européen des brevets

(11) **EP 1 906 571 A1**

(12) **EUROPEAN PATENT APPLICATION**
published in accordance with Art. 153(4) EPC

(43) Date of publication:
02.04.2008 Bulletin 2008/14

(51) Int Cl.:
*H04J 13/00* (2006.01)  *H04J 11/00* (2006.01)
*H04Q 7/38* (2006.01)

(21) Application number: 05772689.5

(22) Date of filing: 19.08.2005

(86) International application number:
PCT/JP2005/015157

(87) International publication number:
WO 2007/020710 (22.02.2007 Gazette 2007/08)

(84) Designated Contracting States:
DE FR GB

(71) Applicant: **MATSUSHITA ELECTRIC INDUSTRIAL CO., LTD.**
Osaka 571-8501 (JP)

(72) Inventors:
• **HAGA, Hiroki,**
**Matsushita Electric Industrial Co.,Ltd.**
**2-1-61,Shiromi,Chuo-ku,**
**Osaka 540-6207 (JP)**

• **MATSUO, Hidenori,**
**Matsushita Electric Industrial Co.,Ltd.**
**2-1-61,Shiromi,Chuo-ku,**
**Osaka 540-6207 (JP)**
• **NAKA, Katsuyoshi,**
**Matsushita Electric Industrial Co.,Ltd.**
**2-1-61,Shiromi,Chuo-ku,**
**Osaka 540-6207 (JP)**

(74) Representative: **Zimmer, Franz-Josef**
**Grünecker, Kinkeldey,**
**Stockmair & Schwanhäusser**
**Anwaltssozietät**
**Maximilianstrasse 58**
**80538 München (DE)**

(54) **BASE STATION DEVICE AND MOBILE STATION DEVICE**

(57) There are provided a base station device transmitting a frame capable of performing cell search without being affected by arrangement of a pilot channel and a mobile station device performing cell search by using the frame. In the base station device (100), a frame formation unit (120) forms a frame by arranging a P-SCH sequence used for synchronization of a frame timing on some symbols of multi-carrier symbols at a predetermined position from the frame head in the frequency direction and arranging an S-SCH sequence corresponding to a base station scrambling code so that it is not overlapped on some of the multi-carrier symbols at a predetermined position from the frame head with the same symbol as the frame synchronization sequence. The frame is received by the mobile station device (200) and the S-SCH is demodulated. Thus, it is possible to directly identify the base station scrambling code without using a pilot channel.

| S–SCH pattern 1 | Code group # | S–SCH pattern 2 | Scrambling code # |
|---|---|---|---|
| 0000 | 1 | 00000 | 1 |
| | | 00001 | 2 |
| | | 00010 | 3 |
| | | : | : |
| | | 11111 | 32 |
| 0001 | 2 | 00000 | 33 |
| | | : | : |
| | | 11111 | 64 |
| : | : | : | : |
| 1111 | 16 | 111111 | 512 |

FIG.6

EP 1 906 571 A1

**Description**

Technical Field

The present invention relates to a base station apparatus and a mobile station apparatus. More particularly, the present invention relates to a base station apparatus and a mobile station apparatus that perform multicarrier communication.

Background Art

3GPP, which is a standards organization, studies 3GPP RAN LTE (Long Term Evolution) to further improve the current third generation mobile telephone system. An OFDM scheme is considered important as a wireless transmission scheme adopted in this system.

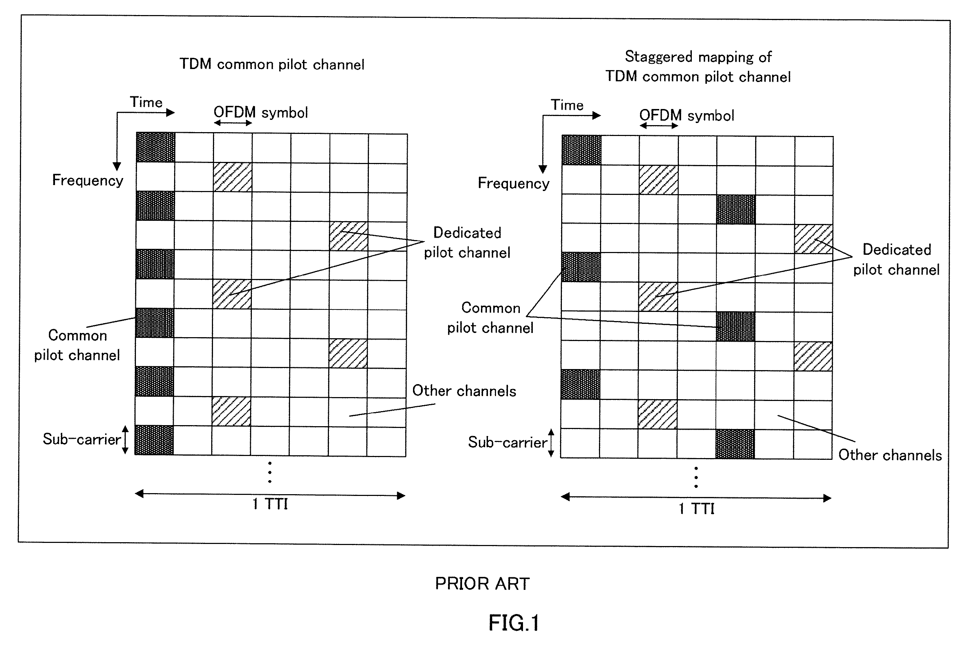

Non-Patent Documents 1 and 2 disclose a pilot channel configuration in the OFDM scheme where common pilot channels and dedicated pilot channels are scattered mapped in the time domain and the frequency domain in a TTI (Transmission Time Interval) (see FIG.1).

On the other hand, Non-Patent Document 3 discloses an SCH configuration where two different SCHs (Synchronization Channels) are multiplexed in the frequency domain in one OFDM symbol (see FIG.2). According to Non-Patent Document 1, SCH sequences are mapped at a rate of one OFDM symbol per frame, and the SCH sequences include a primary SCH (P-SCH) that has a pattern common in all cells and a secondary SCH (S-SCH) that has a pattern different for each cell and that corresponds to a code group.

Further, in a multicarrier communication system, scrambling codes different for each cell are allocated to identify cells to be covered by the base station apparatus, and the mobile station apparatus needs to perform a cell search upon switching of cells (handover) associated with move or upon intermittent reception, that is, needs to identify scrambling codes to identify the cells.

As a method of the above-described cell search using a P-SCH and an S-SCH, Non-Patent Document 2 proposes the following technique.

In the first step in cell search, a mobile station extracts a P-SCH from the received signal and calculates frequency domain correlations between the P-SCH and P-SCH replicas. The mobile station calculates correlations with respect to all symbols and detects the timing at which a maximum correlation value is calculated. A frame timing is detected from the (known) positional relationship of this symbol in the frame.

In the second step, an S-SCH is demodulated (decoded), and a code group is identified from the result.

In the third step, the CPICH is extracted from the received signal based on the frame timing, and correlations are calculated with CPICH replicas corresponding to all scrambling codes that belong to the code group identified in the second step. The scrambling code corresponding to the maximum correlation value is identified. In this way, cell search is finished.

Non-Patent Document 1: 3GPP TR 25.913 v2.0.0 "Requirements for Evolved UTRA and UTRAN"
Non-Patent Document 2: 3GPP R1-050589, NTT DoCoMo "Pilot Channel and Scrambling Code in Evolved UTRA Downlink" (June 2005)
Non-Patent Document 3: 3GPP R1-050590, NTT DoCoMo "Physical Channels and Multiplexing in Evolved UTRA Downlink" (June 2005)

Disclosure of Invention

Problems to be Solved by the Invention

However, when a scrambling code is identified by calculating correlations using the scattered mapped pilot channels as described above, whether or not the scrambling code can be identified depends on pilot channel mapping. That is, when fading fluctuation is substantial in a TTI, correlation calculation using the scattered mapped pilot channels is more likely to fail due to influence of fading.

It is therefore an object of the present invention to provide a base station apparatus and a mobile station apparatus that perform multicarrier communication, and more particularly, a base station apparatus that transmits a frame enabling cell search which is not influenced by pilot channel mapping, and the mobile station apparatus that performs cell search using this frame.

Means for Solving the Problem

The base station apparatus of the present invention performs multicarrier communication and adopts a configuration including: a frame forming section that forms a frame where a frame synchronization sequence used for frame timing synchronization is mapped in part of symbols of a multicarrier symbol at a predetermined position from a beginning of the frame in a frequency domain and where a scrambling code identification signal corresponding to a base station scrambling code allocated to the base station apparatus is mapped in part of the multicarrier symbol in the frequency domain, such that the frame synchronization sequence and the scrambling code identification signal do not overlap with each other in the same symbol; and a transmitting section that transmits the frame.

According to another aspect, the base station apparatus of the present invention performs multicarrier communication and adopts a configuration including: a frame forming section that forms a frame where a frame synchronization sequence used for frame timing synchronization is mapped at predetermined positions from a beginning of the frame in a time domain in predetermined subcarriers and where a scrambling code identification signal corresponding to a base station scrambling code allocated to the base station apparatus is mapped in the time domain in the subcarriers to which the frame synchronization sequence is mapped, such that the frame synchronization sequence and the scrambling code identification signal do not overlap with each other in the same symbol; and a transmitting section that transmits the frame.

The mobile station apparatus of the present invention performs cell search using the frame transmitted from the base station apparatus and adopts a configuration including: a receiving section that receives a frame where a frame synchronization sequence used for frame timing synchronization is mapped in part of symbols of a subcarrier symbol at a predetermined position from a beginning of the frame in a frequency domain and where a scrambling code identification signal corresponding to a base station scrambling code of the base station apparatus is mapped in part of the subcarrier symbol in the frequency domain, such that the frame synchronization sequence and the scrambling code identification signal do not overlap with each other in the same symbol; a correlating section that calculates correlations by multiplying subcarrier symbols of the received frame by frame synchronization sequence replicas according to a mapping pattern of the frame synchronization sequence; a frame timing detecting section that detects a frame timing based on the correlation values calculated by correlating section; a demodulating section that extracts and demodulates the scrambling code identification signal from the received frame according to the frame timing detected by the frame timing detecting section; and an identifying section that identifies the base station scrambling code corresponding to the demodulated scrambling code identification signal.

According to another aspect, the mobile station of the present invention performs cell search using the frame transmitted from the base station apparatus and adopts a configuration including: a receiving section that receives a frame where a frame synchronization sequence used for frame timing synchronization is mapped at predetermined positions from a beginning of the frame in a time domain in predetermined subcarriers and where a scrambling code identification signal corresponding to a base station scrambling code allocated to the base station apparatus is mapped in the time domain in the subcarriers to which the frame synchronization sequence is mapped, such that the frame synchronization sequence and the scrambling code identification signal do not overlap with each other in the same symbol; a correlating section that calculates correlations by multiplying subcarrier signals to which the frame synchronization sequence is mapped by frame synchronization sequence replicas according to a mapping pattern of the frame synchronization sequence; a frame timing detecting section that detects a frame timing based on the correlation values calculated by the correlating section; a demodulating section that extracts and demodulates the scrambling code identification signal from the received frame according to the frame timing detected by the frame timing detecting section; and an identifying section that identifies the base station scrambling code corresponding to the demodulated scrambling code identification signal.

Advantageous Effect of the Invention

According to the present invention, it is possible to provide a base station apparatus and a mobile station apparatus that perform multicarrier communication, and more particularly, the base station apparatus that transmits a frame enabling cell search which is not influenced by pilot channel mapping, and the mobile station apparatus that performs cell search using this frame.

Brief Description of Drawings

FIG.1 illustrates a pilot channel configuration in a frame of the conventional OFDM communication scheme;

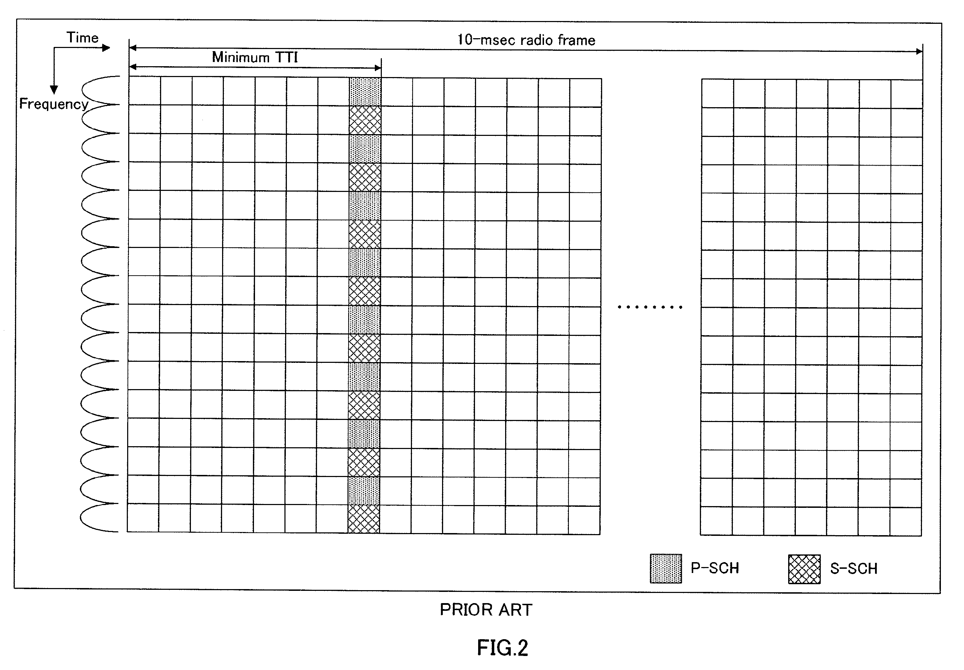

FIG.2 illustrates a synchronization channel configuration in a frame of the conventional OFDM communication scheme;
FIG.3 is a block diagram showing a configuration of a base station apparatus according to Embodiment 1 of the present invention;
FIG.4 is a configuration diagram of a frame formed by the base station apparatus in FIG.3;
FIG.5 illustrates a configuration of an S-SCH sequence included in the frame in FIG.4;
FIG.6 is a table showing a combination of S-SCH sequence patterns in FIG.5;
FIG.7 is a block diagram showing a configuration of a mobile station apparatus according to Embodiment 1;
FIG.8 is a table showing another aspect of the S-SCH sequence patterns;
FIG.9 is a block diagram showing a configuration of a base station apparatus according to Embodiment 2;
FIG.10 is a configuration diagram of a frame formed by the base station apparatus in FIG.9;
FIG.11 is a block diagram showing a configuration of the mobile station apparatus according to Embodiment 2; and
FIG.12 is a block diagram showing a configuration of a base station apparatus according to Embodiment 3.

Best Mode for Carrying Out the Invention

Embodiments of the present invention will be described in detail below with reference to the accompanying drawings. In the embodiments, the same components will be assigned the same reference numerals without further explanations.

(Embodiment 1)

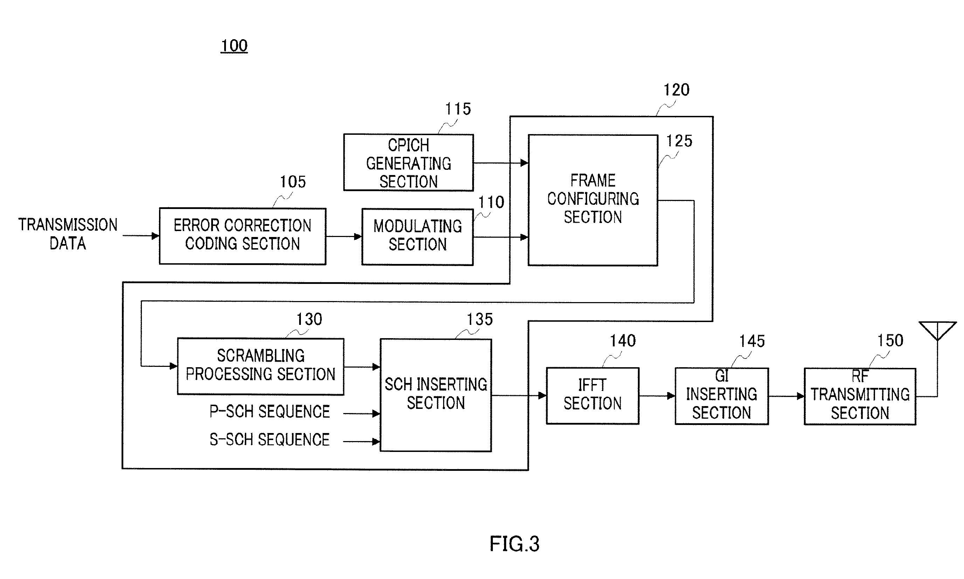

As shown in FIG.3, base station apparatus 100 of Embodiment 1 has error correction coding section 105, modulating section 110, CPICH generating section 115, frame forming section 120, IFFT section 140, GI inserting section 145 and RF transmitting section 150. Frame forming section 120 has frame configuring section 125, scrambling processing section 130 and SCH inserting section 135.

Error correction coding section 105 receives transmission data and performs predetermined error correction coding processing. Modulating section 110 receives the error correction coded signal and performs predetermined modulating processing. CPICH generating section 115 generates a CPICH symbol.

Frame configuring section 125 receives and maps a CPICH symbol and the modulated signal at predetermined positions in the frequency domain and the time domain taking into consideration the position in the frame where an SCH sequence is inserted by SCH inserting section 135. The frame assembled in frame configuring section 125 in this way is inputted to scrambling processing section 130.

Scrambling processing section 130 multiplies the frame formed by frame configuring section 125 by a base station scrambling code which is unique to base station apparatus 100. This base station scrambling code is used to identify the cell (or sectors) covered by base station apparatus 100.

SCH inserting section 135 inserts two different SCH sequences (P-SCH sequence and S-SCH sequence) into the frame multiplied by the base station scrambling code by scrambling processing section 130. This P-SCH sequence (primary SCH sequence) is used for frame synchronization at the frame receiving side. Further, the S-SCH sequence (secondary SCH sequence) represents identification information of the base station scrambling code. The configuration of the S-SCH sequence will be described later.

In this embodiment, two different SCH sequences (P-SCH sequence and S-SCH sequence) are time-multiplexed over a predetermined OFDM symbol, that is, over a specific symbol timing of all subcarriers, and the time-multiplexed SCH sequence is inserted into the frame subjected to scrambling processing.

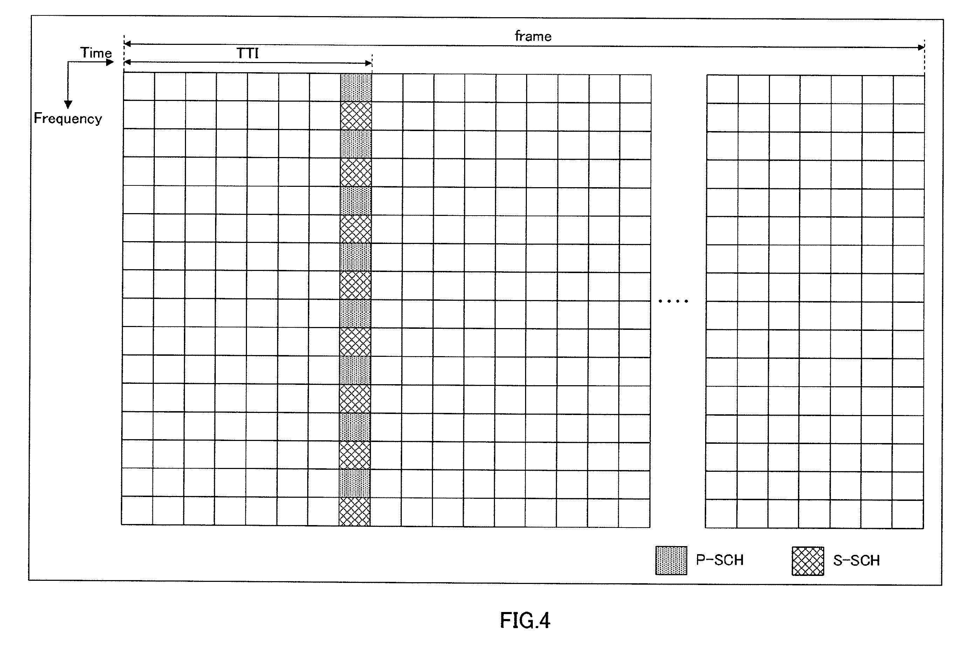

The frame formed by frame forming section 120 as described above adopts the configuration shown in FIG.4. That is, in a predetermined OFDM symbol in the frame, two different SCH sequences (P-SCH sequence and S-SCH sequence) are mapped in the frequency domain. Particularly, in FIG.4, the P-SCH sequence and S-SCH sequence "mapping pattern" in the OFDM symbol is such that a P-SCH sequence and an S-SCH sequence are mapped alternately on subcarriers of the OFDM symbol.

In FIG.3, IFFT section 140 performs an inverse fast Fourier transform (IFFT) on the frame (transmission signal) to which an SCH sequence is inserted by SCH inserting section 135 to convert the frame from the frequency domain to the time domain, and outputs the result to GI inserting section 145.

GI inserting section 145 inserts a guard interval (GI) in the output signal of IFFT section 140. This guard interval is inserted on a per OFDM symbol basis.

The signal where the guard interval is inserted is subjected to RF processing such as up-conversion and A/D conversion by RF transmitting section 150 and is transmitted via an antenna.

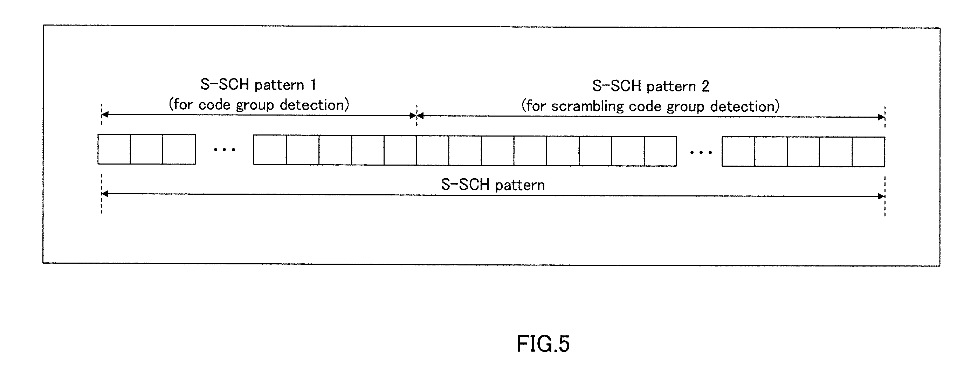

Here, the configuration of the S-SCH sequence will be described. As shown in FIG.5, the S-SCH sequence is divided into two blocks mapped based on S-SCH pattern 1 and S-SCH pattern 2, respectively. S-SCH pattern 1, which is one block, corresponds to a code group that groups base station scrambling codes. The S-SCH pattern 2 sequence corresponds to the base station scrambling code. That is, the whole of the S-SCH sequence includes identification information of the base station scrambling code.

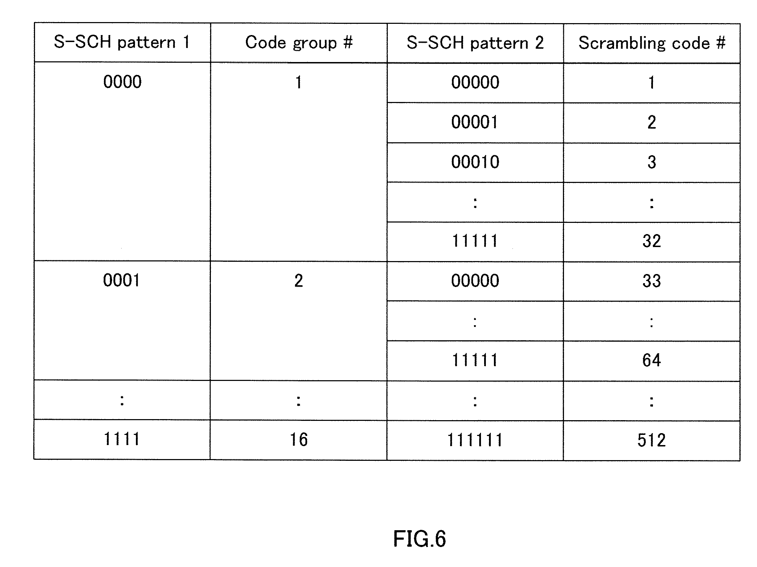

For example, as shown in FIG.6, when there are 512 scrambling codes that are used in the whole system and the scrambling codes are divided into sixteen code groups (that is, sixteen scrambling codes are allocated to each code group), S-SCH pattern 1 requires at least four bits and S-SCH pattern 2 requires at least five bits.

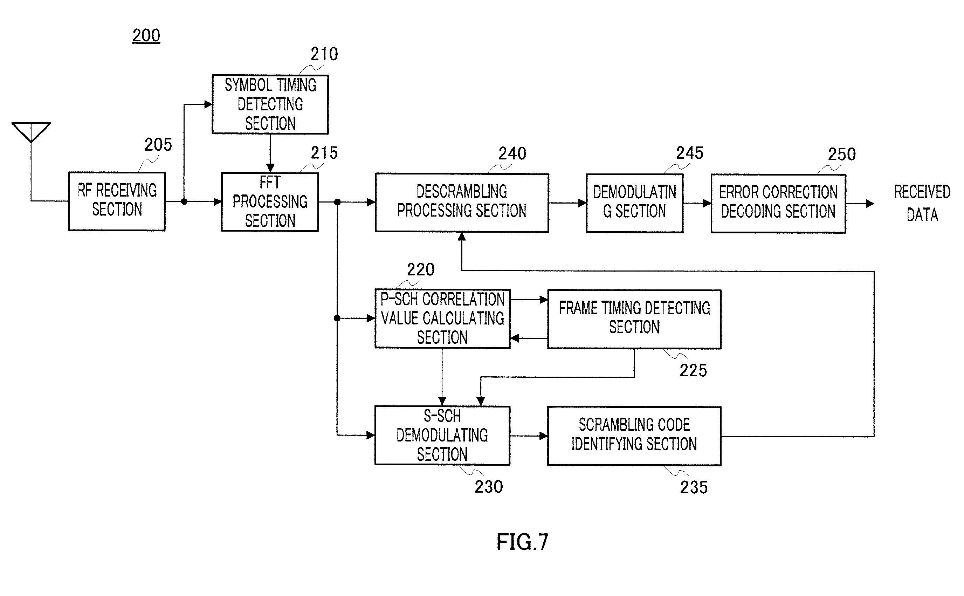

As shown in FIG.7, mobile station apparatus 200 of Embodiment 1 has RF receiving section 205, symbol timing detecting section 210, FFT processing section 215, P-SCH correlation value calculating section 220, frame timing detecting section 225, S-SCH demodulating section 230, scrambling code identifying section 235, descrambling processing section 240, demodulating section 245 and error correction decoding section 250.

RF receiving section 205 receives a multicarrier signal transmitted from base station apparatus 100 via the antenna, and performs predetermined radio receiving processing (such as down-conversion and A/D conversion) on the received signal.

Symbol timing detecting section 210 detects a symbol timing from correlation characteristics of the guard interval included in the received signal (first step in cell search).

FFT processing section 215 removes the guard interval and performs FFT processing according to the symbol timing detected by symbol timing detecting section 210.

P-SCH correlation value calculating section 220 receives the received signal after FFT processing and calculates frequency domain correlations between the received signal and P-SCH sequence replicas with respect to the subcarriers where a P-SCH sequence is multiplexed, for all OFDM symbols in one frame. With the above-described frame configuration, that is, a configuration where a P-SCH sequence is mapped in part of the OFDM symbol, it is only necessary to calculate frequency domain correlations for part of the subcarriers, so that it is possible to reduce the amount of calculation compared to the case where a P-SCH sequence is mapped on the whole of the OFDM symbol.

Further, when receiving frame timing information from frame timing detecting section 225, P-SCH correlation value calculating section 220 calculates frequency domain correlations between symbols where a P-SCH sequence is mapped and P-SCH sequence replicas according to this frame timing information, and outputs the correlation results to S-SCH demodulating section 230.

Frame timing detecting section 225 performs power addition of the correlation values calculated by P-SCH correlation value calculating section 220 per OFDM symbol and detects the timing at which the greatest sum of correlation values (maximum sum of correlation values) is calculated, as a frame timing. Frame timing detecting section 225 outputs the frame timing information to P-SCH calculating section 220 and S-SCH demodulating section 230.

S-SCH demodulating section 230 receives the signal after FFT processing, extracts and demodulates the symbols where an S-SCH sequence is mapped, according to the frame timing information from frame timing detecting section 225. This demodulating processing is performed by extracting the symbols where an S-SCH sequence is mapped, and multiplying the extracted symbols by the complex conjugate of the above-described correlation results received from P-SCH correlation value calculating section 220. This is expressed by the following equation.

$$C_S = X_P \times r_S{}^*$$

Here, $X_p$ is the correlation result between the received signal and the P-SCH replicas, $r_s$ is the S-SCH extracted from the received signal after FFT processing, and $C_s$ is the demodulation result of the S-SCH (S-SCH pattern) (where $r_s{}^*$ is the complex conjugate of $r_s$).

By this means, it is possible to use the above-described correlation results for the P-SCH sequence which is influenced (by phase rotation, amplitude fluctuation or the like due to fading) in the channel between base station apparatus 100 and mobile station apparatus 200, perform channel compensation for the S-SCH sequence which is also influenced in the channel, and make demodulation errors of the S-SCH sequence less likely to occur.

S-SCH demodulating section 230 outputs, for example, the demodulated S-SCH pattern as shown in FIG.6 to scrambling code identifying section 235.

Scrambling code identifying section 235 identifies the corresponding scrambling code based on the S-SCH pattern from S-SCH demodulating section 230 with reference to the table shown in FIG.6.

Descrambling processing section 240 receives the signal after FFT processing from FFT processing section 215, performs descrambling by multiplying the base station scrambling code identified by scrambling code identifying section 235, and outputs the descrambled signal to demodulating section 245.

Demodulating section 245 receives the descrambled signal, performs appropriate demodulating processing and outputs the demodulated signal to error correction decoding section 250.

Error correction decoding section 250 receives the demodulated signal, performs appropriate error correction decoding processing and outputs the error correction decoded signal as received data.

In the above description, a case has been described where a P-SCH sequence and an S-SCH sequence are mapped in the same OFDM symbol, but this is by no means limiting, and a P-SCH sequence and an S-SCH sequence may be mapped in different OFDM symbols. The point is to map a P-SCH sequence in part of the OFDM symbol at a predetermined position from the beginning of the frame in the frequency domain so that the receiving side can identify the frame timing based on frequency domain correlation values between this P-SCH sequence and P-SCH sequence replicas, and to map an S-SCH sequence on subcarriers or at symbol timings in part of the OFDM symbol at a predetermined position from the beginning of the frame, where a P-SCH sequence is not mapped, so that the receiving side can identify the scrambling code by demodulating the S-SCH sequence. When a P-SCH sequence and an S-SCH sequence are mapped in the same OFDM symbol, the above-described channel compensation for the S-SCH sequence is performed using the correlation results for the P-SCH sequence included in the same OFDM symbol. The influence of the channel may be substantially the same at the same timing, and so it is possible to effectively perform channel compensation for the S-SCH sequence using the correlation results for the P-SCH sequence included in the same OFDM symbol.

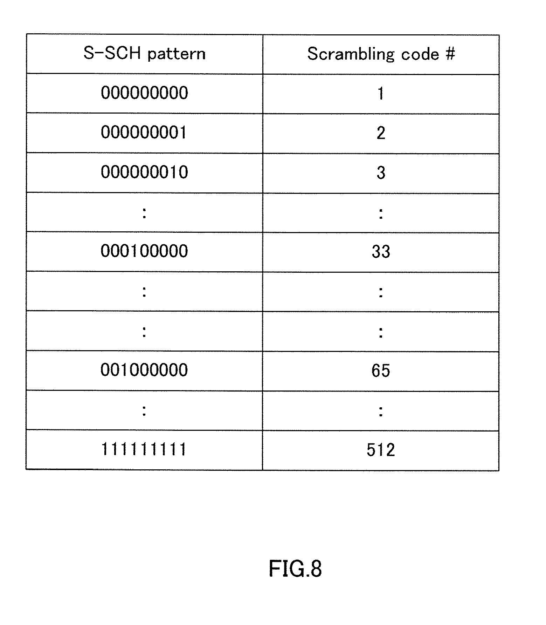

Further, various configurations of the S-SCH sequence as shown in FIG. 6 can be considered. For example, it is also possible to directly associate S-SCH sequence patterns with scrambling code identification information (for example, identificationnumbers) without taking into account the concept of a code group as shown in FIG.8. It is only necessary that the S-SCH sequence patterns include the scrambling code identification information.

Further, in the above description, a case has been described where OFDM communication is performed between base station apparatus 100 and mobile station apparatus 200, but this is by no means limiting, and it is only necessary to perform multicarrier communication. In this case, the above-described "OFDM symbol" is read as a "multicarrier symbol."

In this way, according to Embodiment 1, base station apparatus 100 performs multicarrier communication and is configured with: frame forming section 120 that forms a frame where a frame synchronization sequence (P-SCH sequence) used for frame timing synchronization is mapped in part of symbols of a multicarrier symbol at a predetermined position from the beginning of the frame in the frequency domain, and a scrambling code identification signal (S-SCH sequence) corresponding to the base station scrambling code allocated to base station apparatus 100 is mapped in part of the multicarrier symbol at a predetermined position from the beginning of the frame in the frequency domain, such that the frame synchronization sequence and the scrambling code identification signal do not overlap with each other in the same symbol; and RF transmitting section 150 that transmits the frame.

By this means, by demodulating the scrambling code identification signal, the base station scrambling code can be identified directly at the frame receiving side (mobile station apparatus 200) without using a pilot channel, so that it is possible to realize cell search which is not influenced by pilot channel mapping.

Further, base station apparatus 100 is configured with: frame forming section 120 that forms a frame where a frame synchronization sequence (P-SCH sequence) used for frame timing synchronization is mapped in part of a multicarrier symbol at a predetermined position from the beginning of the frame in the frequency domain, and a scrambling code identification signal (S-SCH sequence) corresponding to the base station scrambling code allocated to base station apparatus 100 is mapped in part of the multicarrier symbol in the frequency domain, such that the frame synchronization sequence and the scrambling code identification signal do not overlap with each other in the same symbol; and RF transmitting section 150 that transmits the frame. That is, frame forming section 120 maps the frame synchronization sequence and the scrambling code identification signal in the same multicarrier symbol.

By this means, by demodulating the scrambling code identification signal, the base station scrambling code can be identified directly at the frame receiving side (mobile station apparatus 200) without using a pilot channel, so that it is possible to realize cell search which is not influenced by pilot channel mapping.

The above-described scrambling code identification signal includes a code group identification signal corresponding to the code group that groups base station scrambling codes, and a scrambling code identification signal included in each code group.

By this means, by demodulating the scrambling code identification signal, the base station scrambling code can be identified directly at the frame receiving side (mobile station apparatus 200) without using a pilot channel, so that it is possible to realize cell search which is not influenced by pilot channel mapping and perform predetermined processing per code group.

Further, according to Embodiment 1, mobile station apparatus 200 performs cell search using a frame transmitted from base station apparatus 100 and adopts a configuration including: RF receiving section 205 that receives a frame where a frame synchronization sequence (P-SCH sequence) used for frame timing synchronization is mapped in part of a multicarrier symbol at a predetermined position from the beginning of the frame in the frequency domain, and a scrambling code identification signal (S-SCH sequence) corresponding to the base station scrambling code of the base station apparatus is mapped in part of the multicarrier symbol at a predetermined position from the beginning of the frame in the frequency domain, such that the frame synchronization sequence and the scrambling code identification signal do not overlap with each other in the same symbol; P-SCH correlation value calculating section 220 that calculates correlations by multiplying each multicarrier symbol of the received frame by frame synchronization sequence replicas according to mapping patterns of the frame synchronization sequence; frame timing detecting section 225 that detects a frame timing based on the correlation values calculated by P-SCH correlation value calculating section 220; S-SCH demodulating section 230 that extracts and demodulates the scrambling code identification signal from the received frame according to the frame timing detected by frame timing detecting section 225; and scrambling code identifying section 235 that identifies the base station scrambling code corresponding to the demodulated scrambling code identification signal.

By this means, by demodulating the scrambling code identification signal, the base station scrambling code can be identified directly without using a pilot channel, so that it is possible to realize cell search which is not influenced by pilot channel mapping.

Further, mobile station apparatus 200 performs cell search using the frame transmitted from base station apparatus 100 and is configured with: RF receiving section 205 that receives a frame where a frame synchronization sequence (P-SCH sequence) used for frame timing synchronization is mapped in part of a multicarrier symbol at a predetermined position from the beginning of the frame in the frequency domain, and a scrambling code identification signal (S-SCH sequence) corresponding to the base station scrambling code of the base station apparatus is mapped in part of the multicarrier symbol at a predetermined position from the beginning of the frame in the frequency domain, such that the frame synchronization sequence and the scrambling code identification signal do not overlap with each other in the same symbol; and P-SCH correlation value calculating section 220 that calculates correlations by multiplying each multicarrier symbol of the received frame by frame synchronization sequence replicas according to mapping patterns of the frame synchronization sequence; frame timing detecting section 225 that detects a frame timing based on the correlation values calculated by P-SCH correlation value calculating section 220; S-SCH demodulating section 230 that extracts and demodulates the scrambling code identification signal from the received frame according to the frame timing detected by frame timing detecting section 225; and scrambling code identifying section 235 that identifies the base station scrambling code corresponding to the demodulated scrambling code identification signal. That is, RF receiving section 205 receives a frame where the frame synchronization sequence and the scrambling code identification signal are mapped in the same multicarrier symbol.

By this means, by demodulating the scrambling code identification signal, the base station scrambling code can be identified directly without using a pilot channel, so that it is possible to realize cell search which is not influenced by pilot channel mapping.

Further, above-describedP-SCHcorrelation value calculating section 220 outputs the correlation results between the frame synchronization sequence mapped in the received frame and the frame synchronization sequence replicas according to the frame timing detected by frame timing detecting section 225. S-SCH demodulating section 230 performs channel compensation and demodulation on the extracted scrambling code identification signal according to the correlation results outputted from P-SCH correlation value calculating section 220.

By this means, it is possible to use the above-described correlation results for the frame synchronization sequence (P-SCH sequence) which is influenced (by phase rotation, amplitude fluctuation or the like due to fading) in the channel between base station apparatus 100 and mobile station apparatus 200, perform channel compensation for the scrambling code identification signal (S-SCH sequence) which is also influenced in the channel, and make demodulation errors of the scrambling code identification signal (S-SCH sequence) less likely to occur. Further, when a subcarrier symbol where a frame synchronization sequence (P-SCH sequence) is mapped is the same as a subcarrier symbol where a scrambling code identification signal (S-SCH sequence) is mapped, the above-described channel compensation for the scrambling code identification signal (S-SCH sequence) is performed using correlation results for the frame synchronization sequence (P-SCH sequence) included in the same subcarrier symbol. The influence of the channel may be substantially the same at the same timing, and so it is possible to effectively perform channel compensation for the scrambling code identification signal (S-SCHsequence) usingcorrelation results for the frame synchronization sequence (P-SCH sequence) included in the same OFDM symbol.

The communication system configured with above-described base station apparatus 100 and mobile station apparatus 200 provides the same advantage as described above.

(Embodiment 2)

In Embodiment 1, a frame is used where a P-SCH sequence and an S-SCH sequence are mapped in the OFDM symbol in the frequency domain. By contrast with this, in Embodiment 2, a frame is used where sequences are mapped on predetermined subcarriers in the time domain.

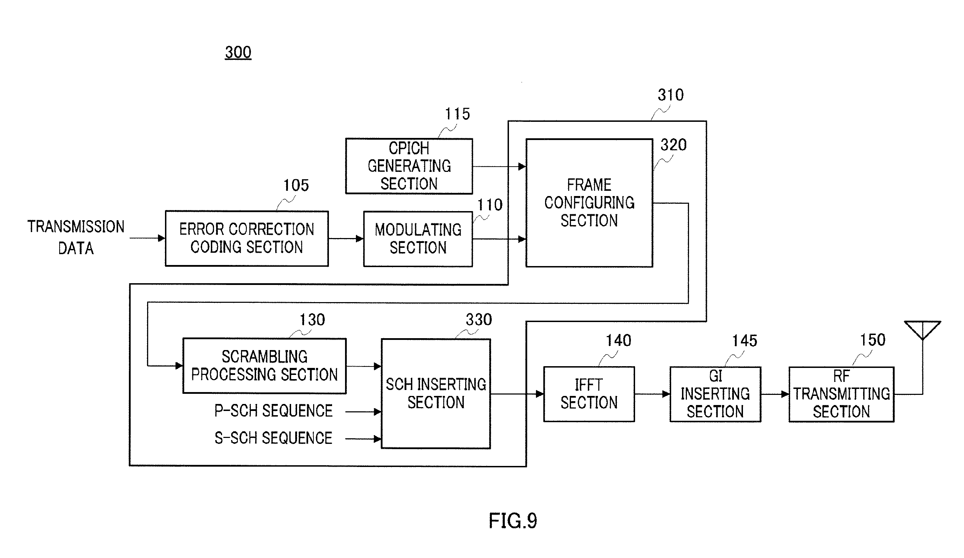

As shown in FIG.9, base station apparatus 300 of Embodiment 2 has frame forming section 310. This frame forming section 310 has frame configuring section 320 and SCH inserting section 330.

Frame configuring section 320 receives and maps a CPICH symbol and the modulated signal at predetermined positions in the frequency domain and the time domain taking into consideration the positions in the frame where an SCH sequence is inserted by SCH inserting section 330. The frame configured by frame configuring section 320 in this way is inputted to scrambling processing section 130.

SCH inserting section 330 inserts two different SCH sequences (P-SCH sequence and S-SCH sequence) to the frame multiplied by the base station scrambling code by scrambling processing section 130.

In this embodiment, SCH sequences are frequency-multiplexed over a plurality of predetermined subcarriers, that is, in the frequency domain, and inserts the frequency-multiplexed SCH sequence into the frame after scrambling processing.

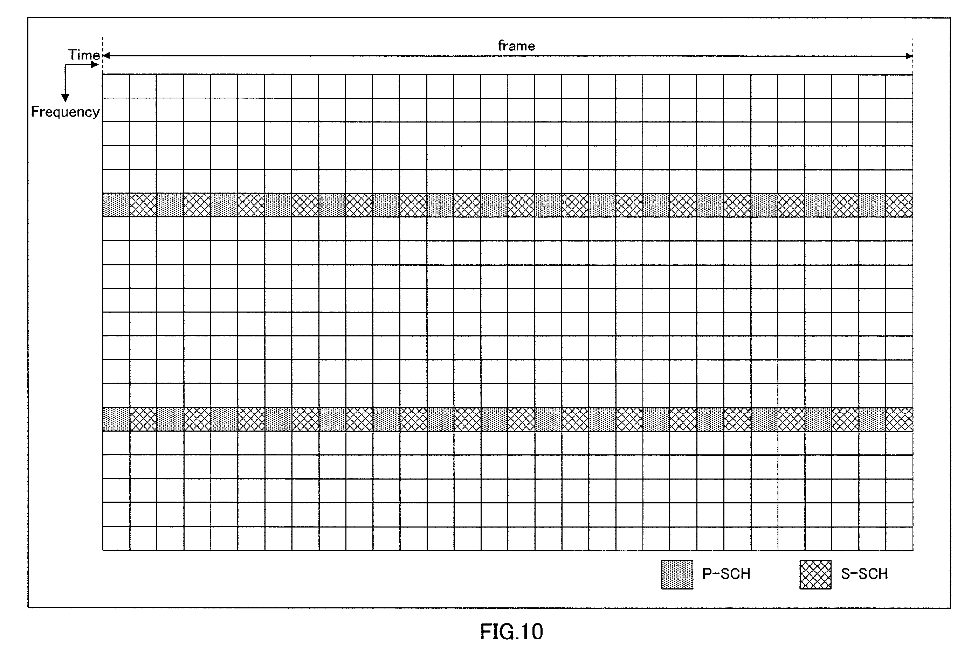

The frame formed by frame forming section 310 as described above adopts the configuration shown in FIG. 10. That is, two different P-SCH sequence and S-SCH sequence are mapped on a plurality of predetermined subcarriers, such that the P-SCH sequence and the S-SCH sequence do not overlap with each other in the same symbol. Particularly, in FIG.10, the P-SCH sequence and S-SCH sequence "mapping pattern" in subcarriers is such that a P-SCH sequence and an S-SCH sequence are mapped alternately on symbols of the subcarriers.

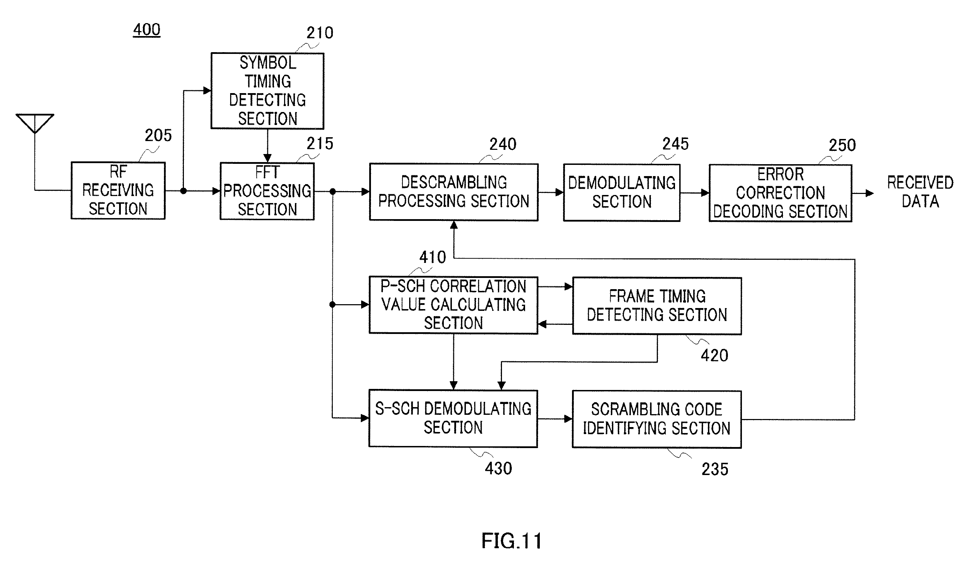

As shown in FIG.11, mobile station apparatus 400 of Embodiment 2 has P-SCH correlation value calculating section 410, frame timing detecting section 420 and S-SCH demodulating section 430.

P-SCH correlation value calculating section 410 receives the signal after FFT processing and calculates time domain correlations between the received signal and P-SCH sequence replicas with respect to subcarriers (hereinafter "SCH subcarriers") where a P-SCH sequence is multiplexed. Particularly, in this embodiment, a P-SCH sequence and an S-SCH sequence are mapped alternately on symbols of the same subcarriers, and so P-SCH correlation value calculating section 410 calculates time domain correlations for every other symbol when calculating correlations between the received signal and P-SCH sequence replicas. That is, P-SCH correlation value calculating section 410 calculates time domain correlations between the received signal and the P-SCH sequence according to P-SCH sequence mapping patterns on the subcarriers.

Further, upon receiving frame timing information from frame timing detecting section 420, P-SCH correlation value calculating section 410 calculates time domain correlations between symbols where a P-SCH sequence is mapped in the P-SCH subcarriers and P-SCH sequence replicas, and outputs the correlation results for the P-SCH subcarriers to S-SCH demodulating section 430.

Frame timing detecting section 420 performs power addition of the correlation values corresponding to a plurality of P-SCH subcarriers and detects a timing at which the greatest sum of correlation values (maximum sum of correlation values) is calculated as a frame timing. Frame timing detecting section 420 outputs the frame timinginformationtoP-SCHcorrelation value calculating section 410 and S-SCH demodulating section 430.

S-SCH demodulating section 430 receives the signal after FFT processing, extracts and demodulates symbols where an S-SCH sequence is mapped in the S-SCH subcarriers according to the frame timing information from frame timing detecting section 420. This demodulating processing is performed after extracting the symbols where an S-SCH sequence is mapped in the S-SCH subcarriers, by multiplying the extracted symbols of the S-SCH subcarriers by the complex conjugate of the above-described correlation results in the corresponding S-SCH subcarriers, which are received from P-SCH correlation value calculating section 410. The demodulation results of the S-SCH subcarriers obtained in this way are averaged, and the S-SCH patterns after demodulating as shown in FIG. 6, for example, are outputted to scrambling code identifying section 235.

In the above description, a case has been described where a P-SCH sequence and an S-SCH sequence are mapped in the same subcarriers, but the present invention is not limited to this, and a P-SCH sequence and an S-SCH sequence may be mapped in different subcarriers. The point is to map a P-SCH sequence at predetermined positions from the beginning of the frame in the time domain in predetermined subcarriers so that the receiving side can identify the frame timing based on the time domain correlation values between the P-SCH sequence and P-SCH sequence replicas, and to map an S-SCH sequence on subcarriers where the P-SCH sequence is not mapped or symbols where the P-SCH sequence is not mapped in the same subcarriers, in the time domain so that the receiving side can identify the scrambling code by demodulating this S-SCH sequence. When subcarriers where a P-SCH sequence is mapped are the same as subcarriers where an S-SCH sequence is mapped, the above-described channel compensation for the S-SCH sequence is performed using the correlation results for the P-SCH sequence mapped on the same subcarriers. The influence of the channel may be substantially the same on the same subcarriers, and so it is possible to perform channel compensation for the S-SCH sequence more effectively using the correlation results for the P-SCH sequence mapped on the same subcarriers.

Further, as in Embodiment 1, it is also possible to configure an S-SCH sequence as shown in FIG.8. The point is that the S-SCH sequence patterns include scrambling identification information.

Further, in the above description, as in Embodiment 1, a case has been described where OFDM communication is performed between base station apparatus 300 and mobile station apparatus 400, but this is by no means limiting, and any multicarrier communication is possible. In that case, the above-described "OFDM symbol" is read as a "multicarrier symbol."

In this way, according to Embodiment 2, base station apparatus 300 performs multicarrier communication and is configured with: frame forming section 310 that forms a frame where a frame synchronization sequence (P-SCH sequence) used for frame timing synchronization is mapped at predetermined positions from the beginning of the frame in the time domain in predetermined subcarriers, and a scrambling code identification signal corresponding to the base station scrambling code allocated to the base station apparatus 300 is mapped at predetermined positions from the beginning of the frame, such that the frame synchronization sequence and the scrambling code identification signal do not overlap with each other in the same symbol; and RF transmitting section 150 that transmits the frame.

By this means, the frame receiving side (mobile station apparatus 400) can identify the base station scrambling code directly without using a pilot channel by demodulating the scrambling code identification signal, so that it is possible to realize cell search which is not influenced by pilot channel mapping.

Further, base station apparatus 300 performs multicarrier communication and is configured with: frame forming section 310 that forms a frame where a frame synchronization sequence (P-SCH sequence) used for frame timing synchronization is mapped at predetermined positions from the beginning of the frame in the time domain in predetermined subcarriers, and a scrambling code identification signal corresponding to the base station scrambling code allocated to base station apparatus 300 is mapped in the time domain on the subcarriers where the frame synchronization sequence is mapped, such that the frame synchronization sequence and the scrambling code identification signal do not overlap with each other in the same symbol; and RF transmitting section 150 that transmits the frame. That is, frame forming section 310 maps the frame synchronization sequence and the scrambling code identification signal on the same subcarriers.

By this means, the frame receiving side (mobile station apparatus 400) can identify the base station scrambling code directly without using a pilot channel by demodulating the scrambling code identification signal, so that it is possible to realize cell search which is not influenced by pilot channel mapping.

The above-described scrambling code identification signal includes a code group identification signal corresponding to a code group that groups base station scrambling codes and a scrambling code identification signal included in each code group.

By this means, the frame receiving side (mobile station apparatus 400) can identify the base station scrambling code directly without using a pilot channel by demodulating the scrambling code identification signal, so that it is possible to realize cell search which is not influenced by pilot channel mapping and perform predetermined processing per code group.

Further, according to Embodiment 2, mobile station apparatus 400 performs cell search using a frame transmitted from base station apparatus 300 and is configured with: RF receiving section 205 that receives a frame where a frame synchronization sequence (P-SCH sequence) used for frame timing synchronization is mapped at predetermined positions from the beginning of the frame in the time domain in predetermined subcarriers, and a scrambling code identification signal (S-SCH sequence) corresponding to the base station scrambling code allocated to base station apparatus 300 is mapped in the time domain, such that the frame synchronization sequence and the scrambling code identification signal do not overlap with each other in the same symbol; P-SCH correlation value calculating section 410 that calculates correlations by multiplying subcarrier signals where the frame synchronization sequence is mapped by frame synchronization sequence replicas according to the mapping pattern of the frame synchronization sequence; frame timing detecting section 420 that detects a frame timing based on the correlation values calculated by P-SCH correlation value calculating section 410; S-SCH demodulating section 430 that extracts and demodulates the scrambling code identification signal from the received frame according to the frame timing detected by frame timing detecting section 420; and scrambling code identifying section 235 that identifies the base station scrambling code corresponding to the demodulated scrambling code identification signal.

By this means, the base station scrambling code can be directly identified without using a pilot channel by demodulating the scrambling code identification signal, so that it is possible to realize cell search which is not influenced by pilot channel mapping.

Further, mobile station apparatus 400 performs cell search using a frame transmitted from base station apparatus 300 and is configured with: RF receiving section 205 that receives a frame where a frame synchronization sequence (P-SCH sequence) used for frame timing synchronization is mapped at predetermined positions from the beginning of the frame in the time domain in predetermined subcarriers, and a scrambling code identification signal (S-SCH sequence) corresponding to the base station scrambling code allocated to base station apparatus 300 is mapped in the time domain, such that the frame synchronization sequence and the scrambling code identification signal do not overlap with each other in the same symbol; P-SCH correlation value calculating section 410 that calculates correlations by multiplying subcarrier signals where the frame synchronization sequence is mapped by frame synchronization sequence replicas according to the mapping pattern of the frame synchronization sequence; frame timing detecting section 420 that detects a frame timing based on the correlation values calculated by P-SCH correlation value calculating section 410; S-SCH demodulating section 430 that extracts and demodulates the scrambling code identification signal from the received frame according to the frame timing detected by frame timing detecting section 420; and scramble code identifying section 235 that identifies the base station scrambling code corresponding to the demodulated scrambling code identification signal.

By this means, the base station scrambling code can be directly identified by demodulating the scrambling code identification signal, without using a pilot channel, so that it is possible to realize cell search which is not influenced by pilot channel mapping.

Above-described P-SCH correlation value calculating section 410 outputs the correlation results between the frame synchronization sequence mapped on the received frame and the frame synchronization sequence replicas, according to the frame timing detected by frame timing detecting section 420. S-SCH demodulating section 430 performs channel compensation and demodulates the extracted scrambling code identification signal using the correlation results outputted from P-SCH correlation value calculating section 410.

By this means, it is possible to use the above-described correlation results for the frame synchronization sequence (P-SCH sequence) which is influenced (by phase rotation, amplitude fluctuation, or the like due to fading) in the channel between base station apparatus 300 and mobile station apparatus 400, perform channel compensation for the scrambling code identification signal (S-SCH sequence) which is also influenced in the channel, and make demodulation errors of the scrambling code identification signal (S-SCH sequence) less likely to occur. Further, when a frame synchronization sequence (P-SCH sequence) and a scrambling code identification signal (S-SCH sequence) are mapped in the same subcarriers, the above-described channel compensation for the scrambling code identification signal (S-SCH sequence) is performed using the correlation results for the frame synchronization sequence (P-SCH sequence) mapped on the same subcarriers. The influence of the channel may be substantially the same on the same subcarriers, and so it is possible to perform channel compensation for the scrambling code identification signal (S-SCH sequence) more effectively using the correlation results for the frame synchronization sequence (P-SCH sequence) mapped on the same subcarriers.

A communication system configured with above-described base station apparatus 300 and mobile station apparatus 400 provides the same effect as described above.

(Embodiment 3)

In Embodiment 1 and Embodiment 2, a P-SCH sequence and an S-SCH sequence are inputted as is to the SCH inserting section and mapped on the frame. By contrast with this, in Embodiment 3, before the S-SCH sequence is inputted to the SCH inserting section, error correction coding is performed.

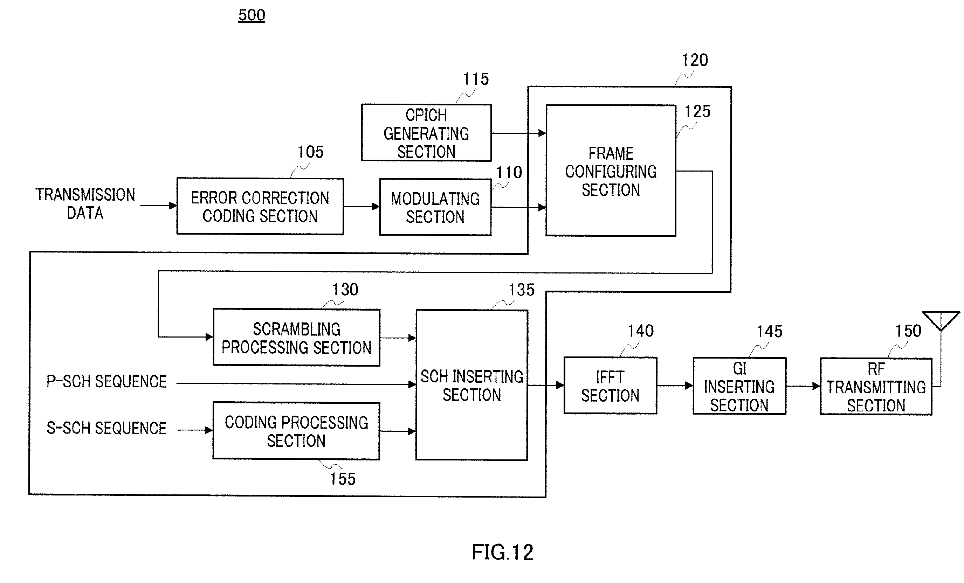

When Embodiment 3 is applied to Embodiment 1, as shown in FIG.12, base station apparatus 500 of Embodiment 3 has coding processing section 155.

This coding processing section 155 performs specific coding on the S-SCH sequence and outputs the coded S-SCH sequence to SCH inserting section 135. Codes which can be used in this specific coding include, for example, Reed-Muller code.

In this way, by coding the S-SCH sequence, it is possible to make demodulation errors of the S-SCH less likely to occur in mobile station apparatus 200, which is the receiving side of the frame transmitted from base station apparatus 500, and, as a result, make correct scrambling code identification more likely. Therefore, it is possible to improve performance of cell search and reduce time for cell search.

Industrial Applicability

The base station apparatus and the mobile station apparatus of the present invention perform multicarrier communication and are suitable for use as a base station apparatus that transmits a frame enabling cell search which is not influenced by pilot channel mapping, and a mobile station apparatus that performs cell search using this frame.

**Claims**

1. Abase station apparatus that performs multicarrier communication, comprising:

   a frame forming section that forms a frame where a frame synchronization sequence used for frame timing synchronization is mapped in part of symbols of a multicarrier symbol at a predetermined position from a beginning of the frame in a frequency domain and where a scrambling code identification signal corresponding to a base station scrambling code allocated to the base station apparatus is mapped in part of the multicarrier symbol in the frequency domain, such that the frame synchronization sequence and the scrambling code identification signal do not overlap with each other in the same symbol; and
   a transmitting section that transmits the frame.

2. The base station apparatus according to claim 1, wherein the scrambling code identification signal comprises a code group identification signal corresponding to a code group that groups the base station scrambling code, and a scrambling code identification signal included in each code group.

3. Abase station apparatus that performs multicarrier communication, comprising:

   a frame forming section that forms a frame where a frame synchronization sequence used for frame timing synchronization is mapped at predetermined positions from a beginning of the frame in a time domain in predetermined subcarriers and where a scrambling code identification signal corresponding to a base station scrambling code allocated to the base station apparatus is mapped in the time domain in the subcarriers to which the frame synchronization sequence is mapped, such that the frame synchronization sequence and the scrambling code identification signal do not overlap with each other in the same symbol; and
   a transmitting section that transmits the frame.

4. The base station apparatus according to claim 3, wherein the scrambling code identification signal comprises a code group identification signal corresponding to a code group where the base station scrambling code is grouped, and a scrambling code identification signal included in each code group.

5. A mobile station apparatus that performs cell search using a frame transmitted from a base station apparatus, the mobile station apparatus comprising:

   a receiving section that receives a frame where a frame synchronization sequence used for frame timing synchronization is mapped in part of symbols of a subcarrier symbol at a predetermined position from a beginning of the frame in a frequency domain and where a scrambling code identification signal corresponding to a base station scrambling code of the base station apparatus is mapped in part of the subcarrier symbol in the frequency domain, such that the frame synchronization sequence and the scrambling code identification signal do not overlap with each other in the same symbol;
   a correlating section that calculates correlations by multiplying subcarrier symbols of the received frame by frame synchronization sequence replicas according to a mapping pattern of the frame synchronization sequence;
   a frame timing detecting section that detects a frame timing based on the correlation values calculated by the correlating section;
   a demodulating section that extracts and demodulates the scrambling code identification signal from the received frame according to the frame timing detected by the frame timing detecting section; and

an identifying section that identifies the base station scrambling code corresponding to the demodulated scrambling code identification signal.

6. The mobile station apparatus according to claim 5, wherein the correlating section outputs correlation results between the frame synchronization sequence mapped on the received frame and the frame synchronization sequence replicas according to the frame timing detected by the frame timing detecting section; and

the demodulating section performs channel compensation and demodulates the extracted scrambling code identification signal using the correlation results outputted from the correlating section.

7. A mobile station apparatus that performs cell search using a frame transmitted from a base station apparatus, the mobile station apparatus comprising:

a receiving section that receives a frame where a frame synchronization sequence used for frame timing synchronization is mapped at predetermined positions from a beginning of the frame in a time domain in predetermined subcarriers and where a scrambling code identification signal corresponding to a base station scrambling code allocated to the base station apparatus is mapped in the time domain in the subcarriers to which the frame synchronization sequence is mapped, such that the frame synchronization sequence and the scrambling code identification signal do not overlap with each other in the same symbol;

a correlating section that calculates correlations by multiplying subcarrier signals to which the frame synchronization sequence is mapped by frame synchronization sequence replicas according to a mapping pattern of the frame synchronization sequence;

a frame timing detecting section that detects a frame timing based on the correlation values calculated by the correlating section;

a demodulating section that extracts and demodulates the scrambling code identification signal from the received frame according to the frame timing detected by the frame timing detecting section; and

an identifying section that identifies the base station scrambling code corresponding to the demodulated scrambling code identification signal.

8. The mobile station apparatus according to claim 7, wherein:

the correlating section outputs correlation results between the frame synchronization sequence mapped on the received frame and the frame synchronization sequence replicas according to the frame timing detected by the frame timing detecting section; and

the demodulating section performs channel compensation and demodulates the extracted scrambling code identification signal using the correlation results outputted from the correlating section.

EP 1 906 571 A1

TDM common pilot channel

Staggered mapping of
TDM common pilot channel

Time

OFDM symbol

Frequency

Common
pilot channel

Sub-carrier

1 TTI

Time

OFDM symbol

Frequency

Dedicated
pilot channel

Common
pilot channel

Dedicated
pilot channel

Other channels

Sub-carrier

Other channels

1 TTI

PRIOR ART

FIG.1

PRIOR ART

FIG.2

EP 1 906 571 A1

100

115

CPICH
GENERATING
SECTION

120

125

105

110

TRANSMISSION
DATA → ERROR CORRECTION
CODING SECTION → MODULATING
SECTION → FRAME
CONFIGURING
SECTION

130

135

SCRAMBLING
PROCESSING SECTION → SCH INSERTING
SECTION

P-SCH SEQUENCE →

S-SCH SEQUENCE →

140

145

150

IFFT
SECTION → GI
INSERTING
SECTION → RF
TRANSMITTING
SECTION

FIG.3

FIG.4

FIG.5

| S-SCH pattern 1 | Code group # | S-SCH pattern 2 | Scrambling code # |
|---|---|---|---|
| 0000 | 1 | 00000 | 1 |
| | | 00001 | 2 |
| | | 00010 | 3 |
| | | : | : |
| | | 11111 | 32 |
| 0001 | 2 | 00000 | 33 |
| | | : | : |
| | | 11111 | 64 |
| : | : | : | : |
| 1111 | 16 | 111111 | 512 |

FIG.6

EP 1 906 571 A1

FIG.7

EP 1 906 571 A1

| S-SCH pattern | Scrambling code # |
|---|---|
| 000000000 | 1 |
| 000000001 | 2 |
| 000000010 | 3 |
| : | : |
| 000100000 | 33 |
| : | : |
| : | : |
| 001000000 | 65 |
| : | : |
| 111111111 | 512 |

FIG.8

EP 1 906 571 A1

300

FIG.9

FIG.10

FIG.11

EP 1 906 571 A1

FIG.12

## INTERNATIONAL SEARCH REPORT

| | International application No. |
|---|---|
| | PCT/JP2005/015157 |

**A. CLASSIFICATION OF SUBJECT MATTER**
    Int.Cl⁷ H04J13/00, 11/00, H04Q7/38

According to International Patent Classification (IPC) or to both national classification and IPC

**B. FIELDS SEARCHED**

Minimum documentation searched (classification system followed by classification symbols)
    Int.Cl⁷ H04J13/00, 11/00, H04Q7/38

Documentation searched other than minimum documentation to the extent that such documents are included in the fields searched
    Jitsuyo Shinan Koho        1922-1996    Jitsuyo Shinan Toroku Koho   1996-2005
    Kokai Jitsuyo Shinan Koho  1971-2005    Toroku Jitsuyo Shinan Koho   1994-2005

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | NTT DoCoMo, Physical Channels and Multiplexing in Evolved UTRA Downlink, 3GPP TSG RAN WG1 Ad Hoc R1-050590, 21 June, 2005 (21.06.05), pages 1 to 24 | 1-5,7<br>6,8 |
| Y<br>A | JP 2002-543659 A (SAMSUNG ELECTRONICS CO., LTD.),<br>17 December, 2002 (17.12.02),<br>Claims 1 to 18; Figs. 5A, 5B<br>& WO 2000/065736 A1      & KR 290678 B<br>& KR 67168 A            & EP 1173931 B1<br>& EP 1173931 A1          & CN 1348636 A<br>& AU 764417 B            & AU 4150500 A | 1-5,7<br>6,8 |
| Y<br>A | NTT DoCoMo, Physical Channel Structures for Evolved UTRA, 3GPP TSG RAN WG1 Meeting #41 R1-050464, 13 May, 2005 (13.05.05), pages 1 to 13 | 3,4,7<br>1,2,5,6,8 |

| ☒ | Further documents are listed in the continuation of Box C. | ☐ | See patent family annex. |

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 09 September, 2005 (09.09.05) | 27 September, 2005 (27.09.05) |

| Name and mailing address of the ISA/<br>    Japanese Patent Office | Authorized officer |
|---|---|
| Facsimile No. | Telephone No. |

Form PCT/ISA/210 (second sheet) (January 2004)

**EP 1 906 571 A1**

**INTERNATIONAL SEARCH REPORT**

| International application No. |
|---|
| PCT/JP2005/015157 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP H11-88295 A  (Matsushita Electric Industrial Co., Ltd.),<br>30 March, 1999 (30.03.99),<br>Figs. 5, 9<br>& CN 1206267 A          & KR 99013970 A<br>& US 2002/0041581 A1     & KR 300903 B<br>& US 6370134 B1          & JP 3323443 B2<br>& JP 2002-246960 A       & CN 1367590 A<br>& EP 892503 B1           & CN 1592178 A<br>& EP 892503 A2 | 1-8 |
| A | JP 2000-49755 A  (Texas Instruments Inc.),<br>18 February, 2000 (18.02.00),<br>Claim 1<br>& KR 99083511 A          & TW 431075 A<br>& EP 954113 A2 | 1-8 |
| E,A | NTT DoCoMo, NEC, SHARP, Physical Channels and Multiplexing in Evolved UTRA Downlink, 3GPP TSG RAN WG1 #42 R1-050707, 02 September, 2005 (02. 09.05), pages 1 to 15 | 1-8 |

Form PCT/ISA/210 (continuation of second sheet) (January 2004)

25

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Requirements for Evolved UTRA and UTRAN. *3GPP TR 25.913 v2.0.0*
- Pilot Channel and Scrambling Code in Evolved UTRA Downlink. *3GPP R1-050589,* June 2005
- Physical Channels and Multiplexing in Evolved UTRA Downlink. *3GPP R1-050590,* June 2005